# EUROPEAN PATENT APPLICATION

(11) **EP 2 927 808 A1**
(43) Date of publication of application: **07.10.2015**
(21) Application number: 15152653.0
(22) Date of filing: 27.01.2015
(51) Int. Cl.: G06F 9/445, G06F 11/34

(54) **Application determination method, application determination device**

(30) Priority: 02.04.2014 JP 2014076071
(71) Applicant: Fujitsu Limited, Kawasaki-shi, Kanagawa 211-8588 (JP)
(72) Inventor: Hashimoto, Hikaru, Ishikawa, 921-8611 (JP); Maehama, Junpei, Ishikawa, 921-8611 (JP)
(74) Representative: Hoffmann Eitle

(57) **Abstract**

A non-transitory computer-readable recording medium stores an application determination program for a correction file. The application determination program causes a computer to execute a process. The process includes storing, in a storage unit, execution history of each of a plurality of programs included in an execution file; and determining whether to apply a correction file according to whether the storage unit stores execution history that matches a predetermined condition, as execution history of at least one of the plurality of programs included in the execution file, when changing the at least one of the plurality of programs by applying the correction file used for correcting the execution file.

## Description

### FIELD

The embodiments discussed herein are related to an application determination method and an application determination device for a correction file.

### BACKGROUND

When a certain function constituting software is corrected, for the purpose of correcting a bug in the function or extending the function, a patch including a library including the corrected function is provided. By using a patch, it is possible to enhance the efficiency in the operation of correcting software, compared to the case of updating the entire software.

Patent Document 1: International Publication No. 2007/105274

However, when a patch is applied, the file configuration of the software may change, and the usage status of a memory by the software may change. Due to this change, the operations of a function that has been normally operating, may become unstable.

Therefore, when the usage status of software by the user does not involve the execution of a function to be corrected by a patch, it may be preferable to avoid applying a patch to maintain the stable operation of the software.

### SUMMARY

Accordingly, it is an object in one aspect of the invention to provide an application determination method and an application determination device capable of determining whether to apply a correction according to the execution status of a program.

According to an aspect of the embodiments, a non-transitory computer-readable recording medium stores an application determination program for a correction file, wherein the application determination program causes a computer to execute a process, the process including storing, in a storage unit, execution history of each of a plurality of programs included in an execution file; and determining whether to apply a correction file according to whether the storage unit stores execution history that matches a predetermined condition, as execution history of at least one of the plurality of programs included in the execution file, when changing the at least one of the plurality of programs by applying the correction file used for correcting the execution file.

### BRIEF DESCRIPTION OF THE DRAWINGS

FIG. 1 illustrates a configuration example of an information processing system according to an embodiment of the present invention;
FIG. 2 illustrates an example of a hardware configuration of an information processing device according to an embodiment of the present invention;
FIG. 3 illustrates an example of a functional configuration of the information processing device according to an embodiment of the present invention;
FIG. 4 is a flowchart of an example of processing procedures executed by an execution history writing unit;
FIG. 5 illustrates an example of a configuration of an execution history storage unit;
FIG. 6 is a flowchart of an example of processing procedures executed by a patch processing unit; and
FIG. 7 illustrates an example of a configuration of an application information file.

### DESCRIPTION OF EMBODIMENTS

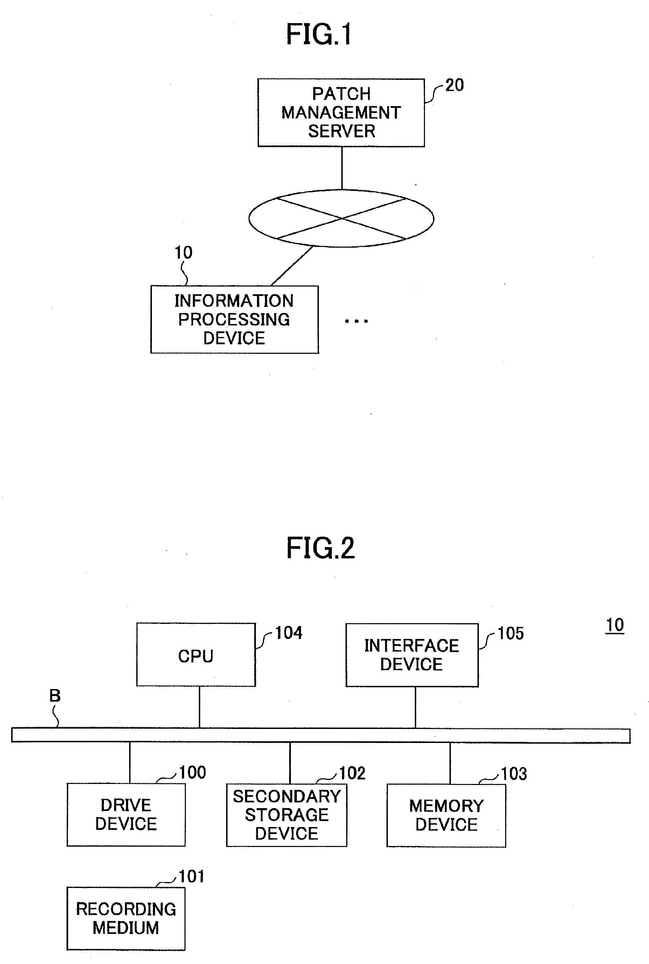

Preferred embodiments of the present invention will be explained with reference to accompanying drawings. FIG. 1 illustrates a configuration example of an information processing system according to an embodiment of the present invention. In FIG. 1, a patch management server 20 and at least one information processing device 10 are connected via a network such as a LAN (Local Area Network) or the Internet.

The information processing device 10 is a computer including software to be the application target of a patch. This software may be any one of an OS (Operating System), middleware, and an application. Furthermore, the information processing device 10 may be a server device for providing a service to a client device connected via the network, or a client device. Furthermore, a mobile phone, a smartphone, or a tablet type terminal may be the information processing device 10.

The patch management server 20 is a computer for managing a patch for the software installed in the information processing device 10. A patch means data including files, in which bugs have been corrected, among a group of files constituting the software. For example, when bug correction has been performed on some of the programs among the programs included in an execution file constituting the software, the execution file including the corrected program constitutes the patch. Note that in the present embodiment, an execution file is a file that causes the CPU of the information processing device 10 to execute a process. The execution file does not only include a file of an execution format, but also includes a file that is an assembly of functions, such as a library.

FIG. 2 illustrates an example of a hardware configuration of the information processing device 10 according to an embodiment of the present invention. The information processing device 10 of FIG. 2 includes a drive device 100, a secondary storage device 102, a memory device 103, a CPU 104, and an interface device 105, which are interconnected by a bus B.

Programs for realizing processes by the information processing device 10 are provided by a recording medium 101. When the recording medium 101 recording a program is set in the drive device 100, the program is installed in the secondary storage device 102 from the recording medium 101 via the drive device 100. However, the program need not always be installed from the recording medium 101; the program may be downloaded from another computer via the network. The secondary storage device 102 stores the installed programs and also files and data needed for the programs.

The memory device 103 reads a program from the secondary storage device 102 and stores the program, when an instruction to activate the program is given. The CPU 104 executes a function relevant to the information processing device 10 according to a program stored in the memory device 103. The interface device 105 is used as an interface for connecting to the network.

Note that an example of the recording medium 101 is a portable recording medium such as a CD-ROM, a DVD disk, or a USB memory. Furthermore, examples of the secondary storage device 102 are a HDD (Hard Disk Drive) or a flash memory. Both the recording medium 101 and the secondary storage device 102 correspond to a computer-readable recording medium.

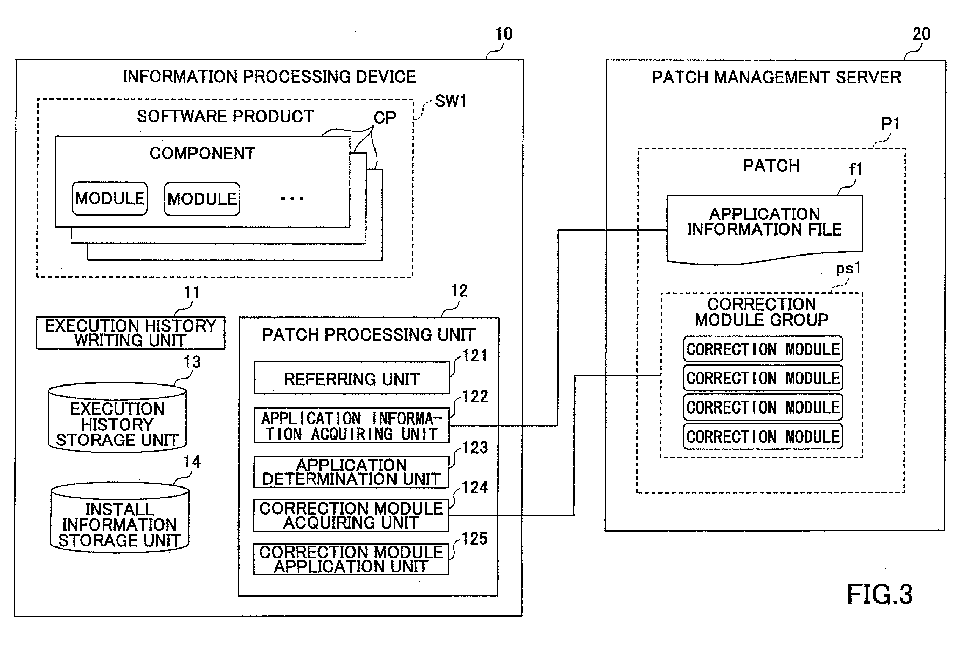

FIG. 3 illustrates an example of a functional configuration of the information processing device 10 according to an embodiment of the present invention. In FIG. 3, a software product SW1 is installed in the information processing device 10. The software product SW1 includes at least one component CP. The component CP is software acting as a component constituting the software product SW1. For example, a component CP may be created for each function of the software product SW1. Each component CP includes at least one module. Each module constitutes at least one file. The module may be, for example, an execution format file or a command file for generating a process, or a library that is an assembly of functions, or a resource file including setting information. For example, a module as a library includes a plurality of functions. A module as an execution format file may also include at least one function. Note that the structure of the software product SW1 illustrated in FIG. 3 is merely one example. The present embodiment may be applied to a software product having a different structure from that illustrated in FIG. 3.

The information processing device 10 further includes an execution history writing unit 11 and a patch processing unit 12. These units are realized by processes that the CPU 104 is caused to execute by at least one program that has been installed in the information processing device 10. Furthermore, the information processing device 10 uses an execution history storage unit 13 and an install information storage unit 14. The execution history storage unit 13 may be realized by using the secondary storage device 102 or a storage device (not illustrated) connected to the information processing device 10 via a network.

When a process relevant to a check point embedded in a module is executed, the execution history writing unit 11 stores execution history indicating that the check point has been executed, in the execution history storage unit 13. A check point is a part that calls the execution history writing unit 11, which is embedded in advance in the source code of a module. Note that the execution history may be stored by using an output function of a versatile comment, without using the execution history writing unit 11. The execution history writing unit 11 may be implemented as a function (hereinafter, "execution history write function"). In this case, in the module, the part calling the execution history write function corresponds to the check point. Note that a check point may be embedded in units of modules or in units of functions included in the module, and check points may be embedded in a plurality of parts in the function. When the check point is embedded in units of modules, the execution history write function may be called at the side using the module, or the execution history write function may be called at the part that is first executed after the module has been loaded. When the check point is embedded in units of functions, the execution history write function may be called at the beginning of the function or at the end of the function. When there are check points for a plurality of parts in the function, for example, in one function, an execution history write function may be called for every path that is executed when a particular condition is satisfied.

The install information storage unit 14 stores identification information (hereinafter, "component ID") of the component CP, for each component CP of the software product SW1 installed in the information processing device 10.

The patch processing unit 12 executes a process relevant to the application of a patch P1. In FIG. 3, the patch processing unit 12 includes a referring unit 121, an application information acquiring unit 122, an application determination unit 123, a correction module acquiring unit 124, and a correction module application unit 125.

The referring unit 121 refers to the patch management server 20, as to whether there is a patch P1 for a component CP installed in the information processing device 10. In the present embodiment, a patch P1 is released for each component CP.

The application information acquiring unit 122 acquires an application information file f1 of a patch P1 when it is found that the patch P1 is released. In the present embodiment, one patch P1 includes an application information file f1 and a correction module group ps1. The application information file f1 is a file defining at least one condition (hereinafter, "application condition") for applying the patch P1, and information indicating the process to be executed when each application condition is satisfied. For example, the application information file f1 is one text file. The correction module group ps1 is an assembly of one or more modules that have been corrected (hereinafter, "correction module"). For example, in a correction module for a library, a correction has been made with respect to some of the functions included in the correction module. Each correction module is associated with identification information of the corresponding module (hereinafter, "module ID"), and stored in the patch management server 20. Note that in the present embodiment, as a matter of convenience, it is assumed that the module ID of the module and the module ID of the correction module of this module are the same. Therefore, by the module ID, it is possible to recognize the correspondence relationship between the module and the correction module of this module.

The application determination unit 123 determines whether to apply each correction module, according to whether the execution history stored in the execution history storage unit 13 satisfies one or more application conditions defined in the application information file f1 acquired by the application information acquiring unit 122. To apply a correction module means to replace the module corresponding to the correction module, with the correction module.

When the application determination unit 123 determines that it is needed to apply one of the correction modules, the correction module acquiring unit 124 acquires (downloads), from the patch management server 20, the correction module or a correction module group including the correction module. The correction module application unit 125 applies the correction module acquired by the correction module acquiring unit 124.

Note that the location where the patch P1 is stored is not limited to the patch management server 20. For example, the patch P1 may be stored in a portable recording medium such as a CD-ROM, a DVD disk or a USB memory. In this case, the patch processing unit 12 may refer to the recording medium set in the drive device 100 of the information processing device 10, and execute a process.

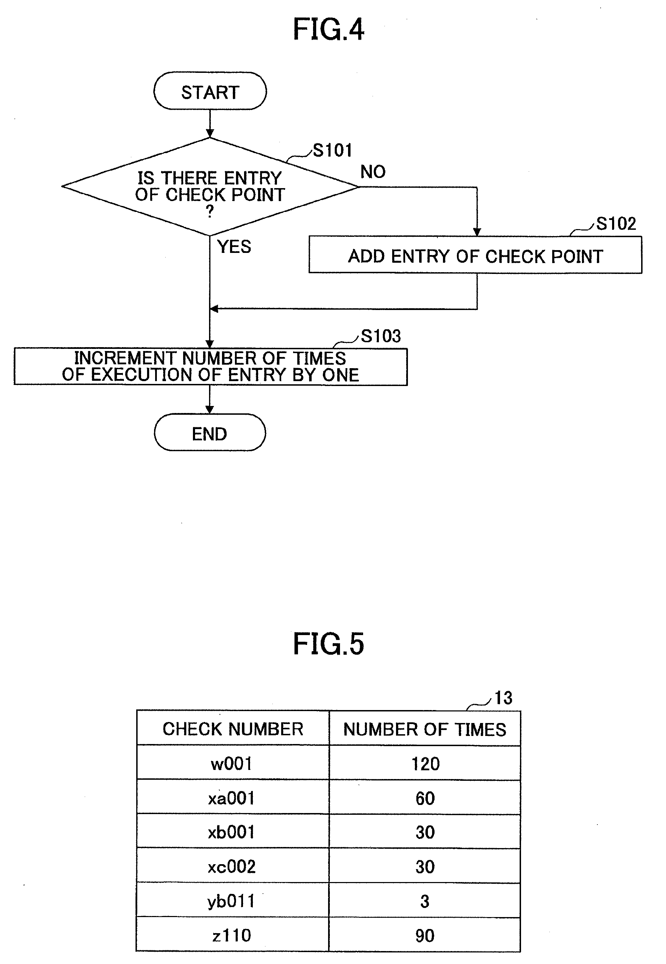

In the following, a description is given of processing procedures executed by the information processing device 10. FIG. 4 is a flowchart of an example of processing procedures executed by the execution history writing unit 11. The process indicated in FIG. 4 is started in response to a call for an execution history write function, at a check point embedded in a respective component included in the software product SW1. Note that in the execution history write function, identification information for identifying each check point (hereinafter, "check number") is specified. That is to say, to the execution history writing unit 11, the check number of the check point is reported. Note that the check number may be an identification name of the check point. For example, the check number of a check point in a certain function may include the function name of the function. Furthermore, the check number of a check point of a certain module may include the file name of the module. That is to say, the rule of naming a check point may be determined appropriately.

In response to the call for the execution history write function, the execution history writing unit 11 determines whether an entry of the reported check number is stored in the execution history storage unit 13 (step S101).

FIG. 5 illustrates an example of a configuration of the execution history storage unit 13. In FIG. 5, the execution history storage unit 13 stores the number of times of execution, in association with the check number. The number of times of execution is an example of execution history, which is the number of times the check point relevant to the check number has been executed.

In step S101, it is determined whether there is an entry (record) including the reported check number. When there is a corresponding entry (YES in step S101), the execution history writing unit 11 increments the number of times of execution in the entry by one (step S103). When there is no corresponding entry (NO in step S101), the execution history writing unit 11 adds an entry corresponding to the check number, to the execution history storage unit 13 (step S102). The value of the number of times of execution in the added entry, is initialized to zero. Next, the history writing unit 11 executes step S103. Therefore, in this case, the value of the number of times of execution in the entry becomes one.

As described above, every time a check point embedded in the respective module is executed, the number of times of execution of the check point is incremented. Note that a check point is embedded in a position according to the option by the creator of the component CP, in each module, in each function, in each command, etc. Therefore, for example, when a check point is embedded in each function, the number of times of execution of each function is stored in the execution history storage unit 13.

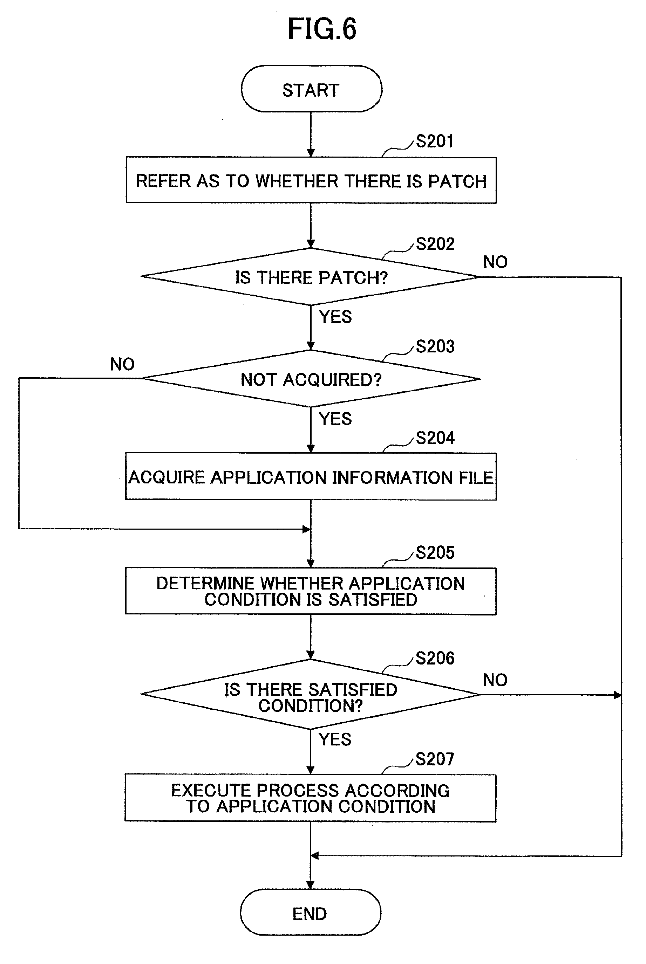

Next, a description is given of processing procedures executed by the patch processing unit 12. FIG. 6 is a flowchart of an example of processing procedures executed by the patch processing unit 12. The process of FIG. 6 may be executed regularly or irregularly. When the process is executed irregularly, for example, the process of FIG. 6 may be started in response to the activation of a particular module that is an execution format file, the loading of a particular module that is a library, or the execution of a particular function included in a particular module.

In step S201, the referring unit 121 sends a reference request as to whether there is a patch P1, to the patch management server 20 (step S201). In response to the reference request, the patch management server 20 returns a list of component IDs associated with the patch P1 stored in the patch management server 20. That is to say, a list of component IDs of the components CP for which the patch P1 is released, is returned.

Next, the referring unit 121 determines whether there is a patch P1 for the component CP installed in the information processing device 10, based on whether the component ID stored in the install information storage unit 14 is included in the returned list of component IDs (step S202). That is to say, when the component ID stored in the install information storage unit 14 is included in the returned list of component IDs, the referring unit 121 determines that there is a patch P1 for the component CP installed in the information processing device 10. Note that a component ID included in both the returned list of component IDs and the install information storage unit 14, is hereinafter referred to as a "target component ID". There may be a plurality of target component IDs. Meanwhile, when the component ID stored in the install information storage unit 14 is not included in the returned list of component IDs, the referring unit 121 determines that there is no patch P1 for the component CP installed in the information processing device 10.

Note that the determination of step S202 may be performed by the patch management server 20. In this case, the reference request sent to the patch management server 20 in step S201 may include a list of component IDs stored in the install information storage unit 14. The patch management server 20 may determine whether there is a patch P1 stored in association with any of the component IDs included in the list, and return the determination result to the information processing device 10.

When there is no patch P1 for the component CP installed in the information processing device 10 (NO in step S202), the process of FIG. 6 ends. When there is a corresponding patch P1 (hereinafter, "target patch P1") (YES in step S202), the application information acquiring unit 122 determines whether the application information file f1 of the target patch P1 has not yet been acquired (step S203). For example, it is determined whether the application information file f1 is not stored in the secondary storage device 102 in association with the target component ID.

When the application information file f1 of the target patch P1 has been acquired (NO in step S203), step S204 is not executed, and the process proceeds to step S205. Note that even when the application information file f1 is acquired, there may be cases where the application information file f1 has been updated, and therefore it may be confirmed as to whether the application information file f1 has been updated. When the application information file f1 has been updated, the application information file may be acquired again.

When the application information file f1 of the target patch P1 has not been acquired (YES in step S203), the application information acquiring unit 122 acquires the application information file f1 of the target patch P1 from the patch management server 20 (step S204). The application information file f1 of the target patch P1 is the application information file f1 stored in the patch management server 20 in association with the target component ID. The application information acquiring unit 122 stores the acquired application information file f1 in the secondary storage device 102 in association with the target component ID.

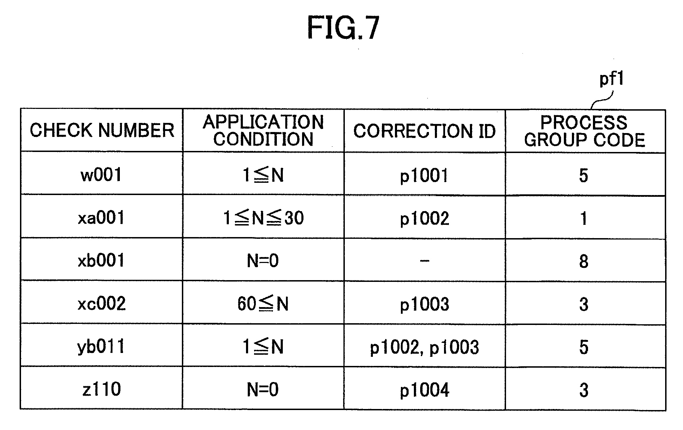

FIG. 7 illustrates an example of a configuration of an application information file. As illustrated in FIG. 7, the application information file pf1 includes one or more entries. Each entry includes a check number, an application condition, a correction ID, a process group code, etc.

The check number is the check number having a number of times of execution that is focused on in the determination of whether the application condition is satisfied, among the number of times of execution stored in the execution history storage unit 13. The application condition is the condition to which the correction module relevant to the correction ID is applied. More specifically, the application condition is the condition at which the process identified by the process group code in the entry is executed. N included in the application condition indicates the number of times of execution with respect to the check number of the entry. The correction ID is the module ID of the correction module to be the application target, among the correction modules included in the correction module group ps1 of the target patch P1. In other words, it may be said that the correction ID is the module ID of the module that is the correction target, among the modules included in the information processing device 10.

That is to say, in the present embodiment, not all of the correction modules included in the target patch P1 are always the application target. According to the information stored in the execution history storage unit 13, that is to say, according to the usage status of the software product SW1 by the user, the correction module to be the application target changes. The process group code is the sum of process codes of one or more processes to be executed, when the application condition is satisfied. In the present embodiment, the following values are defined as examples of process codes.
0: No processes are executed.
1: Download a correction module that is an application target.
2: Wait for the end of the process of loading the module relevant to the correction ID, and apply the correction module.
4: Force-stop a process of loading the module relevant to the correction ID, and apply the correction module.
8: Ignore subsequent entries.

As described above, the process group code included in the application information file f1 is the sum of process codes. However, the process code "0" is used only by itself, and does not constitute a process group code. Furthermore, in a process group code including a plurality of process codes, the order of executing the processes relevant to the respective process codes, is in an ascending order starting from the process code of the smallest value. Therefore, for example, the process group code "3" indicates that the process of the process code "2" is to be executed after the process of the process code "1". The process group code "5" indicates that the process of the process code "4" is to be executed after the process of the process code "1".

Note that the application information file f1 does not have to be acquired based on the reference of whether there is a patch P1 by the referring unit 121. For example, when a new patch P1 is registered in the patch management server 20, the application information file f1 of the patch P1 may be distributed from the patch management server 20 to the information processing device 10.

Next, the application determination unit 123 determines whether the application condition of each entry included in the acquired application information file f1 is satisfied (step S205). For example, with respect to the first entry in FIG. 7, it is determined whether the number of times of execution of check number "WO01" is greater than or equal to one. With respect to the second entry, it is determined whether the number of times of execution of check number "xa001" is greater than or equal to one and less than or equal to 30. With respect to the third entry, it is determined whether the number of times of execution of check number "xb001" is zero. With respect to the fourth entry, it is determined whether the number of times of execution of check number "xc002" is greater than or equal to 60. With respect to the fifth entry, it is determined whether the number of times of execution of check number "yb002" is greater than or equal to one. With respect to the sixth entry, it is determined whether the number of times of execution of check number "z110" is zero. Note that the number of times of execution for a check number is the number of times of execution stored in the execution history storage unit 13 in association with the check number.

Note that step S205 need not be executed in synchronization with step S204 (following step S204). Step S205 may be executed at an arbitrary timing after step S204 is executed. For example, step S205 may be executed when the module as an execution format file is activated or terminated, or when a particular function has started or ended. As described above, when dynamically setting the execution timing of step S205, definition information indicating the timing may be generated and stored in the secondary storage device 102. Alternatively, the definition information may be downloaded from the patch management server 20.

When there is no entry satisfying the application condition (NO in step S206), the process of FIG. 6 is ended. When there is one or more entries satisfying the application condition (YES in step S206), the patch processing unit 12 executes a process indicated by the process group code of the entry (step S207).

For example, for the first or fifth entry of FIG. 7, the correction module acquiring unit 124 acquires, from the patch management server 20, a correction module group including the correction module relevant to the correction ID of the entry. The correction module application unit 125 force-stops the process of loading the module relevant to the module ID, and applies the correction module.

Note that a process for loading a certain module may be specified based on, for example, information indicating the relationship between the module and the process. More specifically, the information indicating the relationship between the module and the process, is information indicating the relationship between the module and the execution format file for generating a process of loading the module. This information may be created in advance and stored in the secondary storage device 102 or may be downloaded from the patch management server 20.

Furthermore, in the case of the second entry, the correction module acquiring unit 124 acquires, from the patch management server 20, a correction module whose module ID is "p1002". In this case, the application of the correction module is not executed even when the process of loading the module relevant to the module ID ends. The meaning of the second entry is that, when the check point of xa001 is greater than or equal to one and less than or equal to 30, there is a high possibility that the correction module having a module ID of "p1002" needs to be applied, and therefore the correction module is downloaded only for the sake of preparation. Therefore, in association with second entry, an entry having a correction ID of "p1002" and a process group code of "2" or "4" may be defined.

In the case of the third entry, the fourth entry and onwards are ignored. Note that the meaning of the process code "8" may be to "invalidate previous entries". In the case of the fourth or sixth entry, the correction module acquiring unit 124 acquires, from the patch management server 20, a correction module relevant to the correction ID of the entry. The correction module application unit 125 waits for the process of loading the module relevant to the module ID to end, and then applies the correction module.

Note that the timing of ending a certain process may be detected as the process reports the end to the correction module application unit 125. Alternatively, the timing of ending a process may be detected as the correction module application unit 125 monitors the state of each process via the OS (Operating System).

In the above description, the timing of applying a correction module is after the end of the process of loading the module corresponding to the correction module. However, options of the timings of applying the correction module may be provided in more fine units. For example, in a case where the user wants to add the timing of unloading the library as an option of the timing of applying the correction module, the unloading of the library being reported to the correction module application unit 125 may be set as an option of the timing of applying the correction module. The report of unloading the library may be performed by the library if the library is able to make the report, or by the module on the side of unloading the library. Furthermore, in a case where the user wants to add the timing of starting the function or ending the function included in the module as an option of the timing of applying the correction module, the start or the end of the function may be reported to the correction module application unit 125. The start and the end of the function may be reported in the function, or may be reported on the side of calling the function.

Note that the contents indicated in the sixth entry are that when the number of times of execution for the check number "z110" is zero, a correction module having a module ID of "p1004" is downloaded and applied. This entry is based on the idea that if the check point relevant to the check number "z110" is not executed, it is estimated that a part having an exclusive relationship with this check point is executed. That is to say, when a part having an exclusive relationship with this check point is executed, the correction ID "p1004" is the module ID of the correction module to be applied.

As described above, in the application information file f1, it is possible to make flexible settings as to which correction module is to be applied in what kind of situation.

For example, it is assumed that a certain module acting as a library (hereinafter, "module a") includes a function A, and a function B and a function C that are called by the function A according to conditions. With respect to this module a, it is assumed that a patch P1 includes a correction module C, in which a bug in the function C has been corrected. In this case, in the application information file f1 relevant to this patch P1, the following entry may be defined. Check number: check number for check point at arbitrary part in function B
Application condition: 1 ≤ N
Correction ID: Module ID of correction module C
Process group code: 1 or 3 or 5

By the above entry, even when the function C is not executed, as long as function B is executed, the correction module C may be applied. As described above, the function B is called from the function A. Therefore, when function B is executed, it means that function A is executed. When function A is executed, it means that there is a possibility that the function C will be called according to the conditions in function A. Therefore, when function B is executed, there is meaning in applying the correction module C in which a correction has been made to function C.

Furthermore, there may be defined an entry in which, when the number of times of execution is greater than or equal to a predetermined value, the correction module is not applied, as in the second entry of FIG. 7. The predetermined value is a value that is considered to be a sufficient execution track record. By this entry, it is possible to prevent a correction module from being applied to a module that has a sufficient execution track record and that is stably operating.

Note that when the patch P1 is distributed by a portable recording medium, in the process of FIG. 6, the process performed on the patch management server 20 may be performed on the recording medium.

Next, a description is given of a modification example of execution history stored in the execution history storage unit 13. In the above, a description is given of storing the number of times of execution as one example of the execution history. When the application condition of the correction module may be determined according to whether there is an execution track record, an indication of whether there is an execution track record may be stored as the execution history. In this case, the history writing unit 11 loads the entry stored in the execution history storage unit 13 into the memory device 103, when the process to which the history writing unit 11 belongs is activated. Before executing step S101 of FIG. 4, when the entry including the reported check number is stored in the memory device 103, the history writing unit 11 does not execute step S101 and onward. As a result, in the execution history storage unit 13, one is stored for every check point that is executed, and the number of times of execution is not updated according to subsequent executions. Accordingly, the access frequency to the execution history storage unit 13 may be reduced, and it is possible to reduce the possibility of the degradation in the performance due to writing in the execution history.

Furthermore, a value of a particular variable at a check point may be included in the execution history. In this case, the application condition may be set with respect to the value of the variable. Accordingly, it is possible to determine whether to apply the correction module according to the execution status of the function.

Furthermore, a value of an argument of the function may be included in the execution history. In this case, the application condition may be set for the value of an argument. Accordingly, it is possible to determine whether to apply the correction module according to the value of the argument of the function. When the data type of the argument is a data string, a value indicating the character type (full-width characters, half-width characters, and alphanumeric characters) of the character string may be included in the execution history.

Furthermore, the execution history may include a value indicating whether the application condition is satisfied, such as "ON" or "OFF". In this case, in each of the entries of the application information file f1, there is no need to provide an application condition. This is because when the execution history storage unit 13 stores "ON" with respect to a check number, it is determined that the application condition is satisfied. This kind of execution history is effective in cases where the application of a correction module is to be avoided when a certain check point is executed. In this case, execution history indicating "OFF" is to be stored in the execution history storage unit 13 for the check point.

As described above, according to the present embodiment, execution history is stored with respect to a function included in each module, and it is determined whether to apply a correction module according to whether the execution history satisfies a predetermined condition. Therefore, it is possible to determine whether to apply a correction module according to the execution status of the function.

Furthermore, according to the present embodiment, among a plurality of correction modules, a correction module, which corresponds to a module including a function storing execution history indicating that execution has been performed, is the application target. Therefore, it is possible to reduce the possibility that the operations of the software product SW1 become unstable, due to the application of a correction module corresponding to a module that does not include an executed function, i.e., a module that is not used.

Note that in one information processing device 10, a plurality of software products are installed. When the software products respectively include the same component, for example, in order to make it possible to identify the target to apply a patch among the components that are the same, a patch application file may be created for each software product. Furthermore, each check number and correction ID may include identification information of the software product and identification information of the component.

Note that in the present embodiment, the execution history storage unit 13 is an example of a storage unit. The application determination unit 123 is an example of a determination unit. The information processing device 10 is an example of an application determination device. The module is an example of an execution file. The correction module is an example of a correction file.

The present invention is not limited to the specific embodiments described herein, and variations and modifications may be made without departing from the scope of the present invention.

According to an aspect of the embodiments, an application determination method and an application determination device are provided, which are capable of determining whether to apply a correction according to the execution status of a program.

## Claims

1. A non-transitory computer-readable recording medium storing an application determination program for a correction file, wherein the application determination program causes a computer to execute a process, the process comprising:
storing, in a storage unit, execution history of each of a plurality of programs included in an execution file; and
determining whether to apply a correction file according to whether the storage unit stores execution history that matches a predetermined condition, as execution history of at least one of the plurality of programs included in the execution file, when changing the at least one of the plurality of programs by applying the correction file used for correcting the execution file.

2. The non-transitory computer-readable recording medium according to claim 1, wherein
the storing includes storing, in the storage unit, a number of times of execution of each of the plurality of programs included in the execution file, and
the determining includes determining whether to apply a correction file according to whether the storage unit stores a number of times of execution that is greater than or equal to a predetermined number of times, as a number of times of execution of the at least one of the plurality of programs.

3. The non-transitory computer-readable recording medium according to claim 1 or 2, wherein
the storing includes storing, in the storage unit, execution history of the execution file, and
the determining includes determining whether to apply a correction file according to whether the storage unit stores execution history that matches a predetermined condition, as execution history of the execution file.

4. The non-transitory computer-readable recording medium according to any one of claims 1 through 3, wherein
the determining includes determining to apply a correction file in which a correction has been made with respect to a third program, to the execution file including a first program, a second program, and the third program, when the storage unit stores execution history indicating that the second program has been executed, and when the storage unit does not store execution history indicating that the third program has been executed, between the second program and the third program which are called from the first program.

5. The non-transitory computer-readable recording medium according to any one of claims 1 through 4, wherein
the storing includes storing, in the storage unit, execution history of each of the plurality of programs included in each of a plurality of the execution files, and
the determining includes determining to apply a correction file corresponding to an execution file among the plurality of the execution files including a program among the plurality of programs for which the storage unit stores execution history indicating that execution has been performed, among a plurality of correction files respectively corresponding to the plurality of the execution files.

6. An application determination method for a correction file, the application determination method causing a computer to execute a process comprising:
storing, in a storage unit, execution history of each of a plurality of programs included in an execution file; and
determining whether to apply a correction file according to whether the storage unit stores execution history that matches a predetermined condition, as execution history of at least one of the plurality of programs included in the execution file, when changing the at least one of the plurality of programs by applying the correction file used for correcting the execution file.

7. The application determination method according to claim 6, wherein
the storing includes storing, in the storage unit, a number of times of execution of each of the plurality of programs included in the execution file, and
the determining includes determining whether to apply a correction file according to whether the storage unit stores a number of times of execution that is greater than or equal to a predetermined number of times, as a number of times of execution of the at least one of the plurality of programs.

8. The application determination method according to claim 6 or 7, wherein
the storing includes storing, in the storage unit, execution history of the execution file, and
the determining includes determining whether to apply a correction file according to whether the storage unit stores execution history that matches a predetermined condition, as execution history of the execution file.

9. The application determination method according to any one of claims 6 through 8, wherein
the determining includes determining to apply a correction file in which a correction has been made with respect to a third program, to the execution file including a first program, a second program, and the third program, when the storage unit stores execution history indicating that the second program has been executed, and when the storage unit does not store execution history indicating that the third program has been executed, between the second program and the third program which are called from the first program.

10. The application determination method according to any one of claims 6 through 9, wherein
the storing includes storing, in the storage unit, execution history of each of the plurality of programs included in each of a plurality of the execution files, and
the determining includes determining to apply a correction file corresponding to an execution file among the plurality of the execution files including a program among the plurality of programs for which the storage unit stores execution history indicating that execution has been performed, among a plurality of correction files respectively corresponding to the plurality of the execution files.

11. An application determination device (FIG. 3) for a correction file, the application determination device comprising:
a storage unit (13) configured to store execution history of each of a plurality of programs included in an execution file; and
a determination unit (123) configured to determine whether to apply a correction file according to whether the storage unit stores execution history that matches a predetermined condition, as execution history of at least one of the plurality of programs included in the execution file, when changing the at least one of the plurality of programs by applying the correction file used for correcting the execution file.

12. The application determination device according to claim 11, wherein
the storage unit stories a number of times of execution of each of the plurality of programs included in the execution file, and
the determination unit determines whether to apply a correction file according to whether the storage unit stores a number of times of execution that is greater than or equal to a predetermined number of times, as a number of times of execution of the at least one of the plurality of programs.

13. The application determination device according to claim 11 or 12, wherein
the storing unit stores execution history of the execution file, and
the determination unit determines whether to apply a correction file according to whether the storage unit stores execution history that matches a predetermined condition, as execution history of the execution file.

14. The application determination device according to any one of claims 11 through 13, wherein
the determination unit determines to apply a correction file in which a correction has been made with respect to a third program, to the execution file including a first program, a second program, and the third program, when the storage unit stores execution history indicating that the second program has been executed, and when the storage unit does not store execution history indicating that the third program has been executed, between the second program and the third program which are called from the first program.

15. The application determination device according to any one of claims 11 through 14, wherein
the storage unit stores execution history of each of the plurality of programs included in each of a plurality of the execution files, and
the determination unit determines to apply a correction file corresponding to an execution file among the plurality of the execution files including a program among the plurality of programs for which the storage unit stores execution history indicating that execution has been performed, among a plurality of correction files respectively corresponding to the plurality of the execution files.
